# EUROPÄISCHE PATENTSCHRIFT

(11) **EP 1 922 149 B1**
(45) Veröffentlichungstag und Bekanntmachung des Hinweises auf die Patenterteilung: **01.02.2012**
(21) Anmeldenummer: 06762714.1
(22) Anmeldetag: 19.07.2006
(51) Int. Cl.: B02C 15/04, B02C 23/26

(54) **VERFAHREN UND VORRICHTUNG ZUR VERMAHLUNG VON HEISSEM UND FEUCHTEM ROHMATERIAL**
METHOD AND APPARATUS FOR MILLING HOT AND WET RAW MATERIALS
PROCEDE ET DISPOSITIF POUR BROYER UNE MATIERE PREMIERE CHAUDE ET HUMIDE

(30) Priorität: 26.08.2005 DE 102005040519
(43) Veröffentlichungstag der Anmeldung: 21.05.2008
(73) Patentinhaber: Loesche GmbH, 40549 Düsseldorf (DE)
(72) Erfinder: LOHLE, Willy, 41466 Neuss (DE); BONK, Hans, 45481 Mühlheim (DE); HEUKEN, Franz-Josef, 41066 Mönchengladbach (DE)
(74) Vertreter: Heim, Hans-Karl
(86) Internationale Anmeldenummer: PCT/EP2006/007122
(87) Internationale Veröffentlichungsnummer: WO 2007/022837

(56) Entgegenhaltungen:
- EP-A1- 0 579 214
- DE-A1- 2 361 060
- US-A- 3 608 839
- US-A- 4 090 671
- US-A- 4 597 537

## Beschreibung

Die Erfindung betrifft ein Verfahren zur Vermahlung von heißem und feuchtem Rohmaterial gemäß dem Oberbegriff des Anspruchs 1 und eine Vorrichtung zur Vermahlung von heißem und feuchtem Rohmaterial gemäß dem Oberbegriff des Anspruchs 15.

Die Erfindung ist insbesondere in der Zementindustrie für die Vermahlung und gleichzeitige Trocknung von Rohmaterialien, wie Zementklinker, Schlacke und Zuschlagstoffen vorgesehen.

Es ist bekannt, dass für derartige Mahl-Trocknungsprozesse Vertikalmühlen mit integriertem oder aufgesetztem Sichter, insbesondere Luftstrom-Wälzmühlen des Loesche-Typs, betonders vorteilhaft geeignet sind. Mahlsysteme mit Vertikalmühlen können im Verbund mit Drehrohröfen betrieben werden, und außerdem können die Ofenabgase aus dem Wärmetauscher- und Klinkerkühlerprozess zur Mahltrocknung und zum pneumatischen Transport des Mahlgutes genutzt werden.

In der DE 198 36 323 C2 sind Verfahren und Anlagen zur Herstellung von Zement mit einer Vertikalmühle beschrieben. Aus der DE-AS 23 61 060 ist neben einer Mahltrocknung von Rohmehl in einer Luftstrom-Wälzmühle eine Kühlungsmahlung von Zementklinker in einer einem Drehrohrofen nachgeschalteten Luftstrom-Wälzmühle bekannt.

In US 4090671 A ist ein Verfahren zur Vermahlung von Zementklinker beschrieben, welches in einer wenigstens zwei Kammern aufweisenden Rohrmühle durchgeführt wird. Zusammen mit dem zu vermahlenden Material wird Luft oder ein Gas für einen Wärmeaustausch mit dem Material der Mühle zugeführt. Das Mahlprodukt wird am gegenüber liegenden Ende der Mühle ausgetragen. Zwischen den zwei Mahlkammern ist eine Separationszone zur Überführung des zu vermahlenden Materials aus der ersten Kammer in die zweite Kammer und zur Abführung der Feuchtigkeit aus der ersten Mahlkammer und Zuführung von Frischluft oder -gas in die zweite Mahlkammer ausgebildet.

Aus US 4597537 A ist eine Vertikalmühle bekannt, welche einen integrierten Sichter und ein definiert ausgebildetes Mühlengehäuse aufweist. Zur Verbesserung der Effizienz des Sichters sind Einbauelemente im Bereich des oberen Mahlraums und vor dem Sichter angeordnet, welche der Beeinflussung der Mahlgut-Fluid-Strömung dienen. Im Bereich des Sichters sind außerdem tangentiale Gaszuführungen vorgesehen, mit welchen die Gasströmung im Sichter reguliert werden soll. In der Wandung des Grießekonus ist eine weitere Gaszuführung angeordnet, durch welche Heißgas zugeführt werden kann, um eine Trennung von an den Grobpartikeln anhaftenden Feinpartikeln von den Grobpartikeln und die Rückführung der Feinpartikel in den Sichtraum zu erreichen.

Für die Vermahlung von Schlacken und Mischzementen werden vorteilhaft modifizierte Wälzmühlen des Loesche-Systems eingesetzt, welche als 2+2-Walzen-Mühlen oder 3+3-Walzen-Mühlen bezeichnet werden. Bei diesen Vertikalmühlen werden Walzenpaare, bestehend jeweils aus einer Vorverdichtwalze, auch S-Walze (Slave-roller) genannt, und einer Mahlwalze, auch M-Walze (Master-roller) genannt, eingesetzt (EP 0 406 644 B1).

Bei der Vermahlung von Rohmaterial, wie Zementklinker, Schlacke und Zuschlagstoffen, weisen die Rohmaterialkomponenten unterschiedliche Feuchten und/oder unterschiedliche Temperaturen auf. Heißer Zementklinker, welcher Temperaturen von 120° C und mehr aufweisen kann, steht in Zementwerken zur Vermahlung an, wenn die Kapazität der Drehrohröfen gesteigert wurde und die vorhandene Kapazität der Klinkerkühler nicht ausreicht und/oder wenn die Klinkerlagerung in Silos oder eine Außenlagerung keine ausreichende Nachkühlzeit bis zu der Vermahlung vorsieht, was insbesondere bei der On-line-Produktion vorkommen kann.

Bei der Vermahlung von heißem Zementklinker in Vertikalmühlen mit Schlacke und feuchten Zuschlagstoffen beeinträchtigen sich die benötigten Kühl- und Trocknungsgase in ihrer Funktion als Traggase negativ. Trocknungsgas bzw. Heißgas muss mit einer ausreichend hohen Temperatur und einem Volumen zugeführt werden, so dass der Trocknungsprozess kurzfristig und während der Vermahlung erfolgen kann. Das Kühlgas, insbesondere Frischluft, wird bei entsprechenden Aufgabetemperaturen, insbesondere des Zementklinkers oder der Schlacke, dem Heißgas geregelt zugemischt.

Um die gewünschte Gas- und Produkttemperatur nach dem Sichter zu erreichen, ist es vielfach erforderlich, eine Wassereinspritzung in den Mahlraum, beispielsweise in die Grießeumlaufzone, durchzuführen. Die Nachteile sind ein erhöhter Energiebedarf aufgrund der erforderlichen Kühlwasserverdampfung, eine Beeinträchtigung der Zementqualität und ein erhöhter Verschleiß der Mahlteile sowie ein erhöhter Energiebedarf am Mühlenmotor.

Der Erfindung liegt die Aufgabe zugrunde, ein Verfahren und eine Vorrichtung für eine zeitgleiche Vermahlung und Trocknung von heißem und feuchtem Rohmaterial in einer Vertikalmühle zu schaffen, welche eine optimale Durchsatzleistung sowie eine Energieeinsparung und gleichzeitig eine Verbesserung der Produktqualität, insbesondere bei Mischzementen, gewährleisten.

In Bezug auf das Verfahren wird die Aufgabe durch die Merkmale des Anspruchs 1 und in Bezug auf die Vorrichtung durch die Merkmale des Anspruchs 15 gelöst. Zweckmäßige und vorteilhafte Ausgestaltungen sind in den Unteransprüchen und in der Figurenbeschreibung enthalten.

Eine Grundidee des erfindungsgemäßen Verfahrens kann darin gesehen werden, eine hohe Mahl-/Trocknungseffizienz zu erreichen, indem das Temperaturniveau des Heißgases, welches der Mühle über den Düsenring bzw. Leitschaufelkranz zugeführt wird, so eingestellt wird, dass Mahl- und Trocknungsgeschwindigkeit zeitgleich sind. Dadurch kann eine mahltechnisch höchste Durchsatzleistung bei geringster elektrischer Leistungsaufnahme der Mühlen-, Sichter- und Gebläsemotoren erreicht werden.

Erfindungsgemäß wird Heißgas mit einer Gaseintrittstemperatur zugeführt, welche neben der Berücksichtigung der Rohmaterialtemperatur maßgeblich von der Feuchte der Rohmaterialkomponente mit der höchsten Feuchte bestimmt wird. Gemäß der Erfindung wird zur Regelung der vorgegebenen Sichteraustrittstemperatur des Gas-Produkt-Gemisches als Kühlmedium ein Kühlgas oberhalb des Düsenrings und getrennt vom HeiBgas in die Vertikalmühle eingeleitet und dem Mahlgut-Gas-Gemisch zugemischt.

Eine Wassereinspritzung als Kühlmittel wird durch die Zuführung eines Kühlgases, insbesondere von Frischluft aus der Umgebung, ersetzt, zumindest erheblich reduziert. Damit ist der Vorteil verbunden, dass aufgrund der nicht mehr erforderlichen oder reduzierten Kühlwasserverdampfung eine Einsparung von Heizenergie erreicht wird.

Es ist von Vorteil, dass durch die Aufteilung des Mühlengasgesamtvolumens bzw. des Traggases in Heißgas, welches im Mühlenunterteil zugeführt wird, und in Kühlgas, welches im Mühlenoberteil zugeführt wird, die zeitgleiche Mahlung und Trocknung von dem hier zugeführten Heißgas bestimmt.wird. Aufgrund der möglichen hohen Gaseintrittstemperaturen im unteren Bereich des Mühlenoberteils wird eine zeitgleiche Mahlung und Rohmaterialtrocknung und damit eine optimale Mühlendurchsatzleistung möglich. Gleichzeitig kann aufgrund des Ersatzes von Kühlwasser durch Kühlgas, insbesondere durch Frischluft bzw. zumindest partiell gekühlte Luft, in einer energietechnisch optimalen Weise die erforderliche Produkt- und Gastemperatur nach der Mühle, welche vorteilhaft 95° C sein kann, geregelt werden.

Indem auf eine Kühlwassereinspritzung verzichtet werden kann bzw. nur noch erheblich reduzierte Kühlwassermengen eingespritzt werden, wird eine Einsparung von Heizenergie und gleichzeitig eine Verbesserung der Produktqualität erreicht. Außerdem ergeben sich Prozessvorteile für nachgeschaltete Anlagenausrüstungen, wie Schlauchfilter und Gebläse.

Es ist zweckmäßig, das Mahlsystem mit Vertikalmühle, Sichter und Filter mit einem Mühlenventilator bzw. Mühlengebläse zu betreiben, welches eine erforderliche Volumenströmung erzeugt. In der Regel wird das Mahlsystem mit Unterdruck betrieben, so dass vorteilhaft Umgebungsluft als Kühlgas im oberen Mühlenbereich angesaugt werden kann.

In Abhängigkeit von der Aufgabetemperatur der Rohmaterialkomponenten und der Feuchte kann es zweckmäßig sein, Heißgas mit einer Eintrittstemperatur 180° C, beispielsweise mit einer Temperatur um 230° C, der Vertikalmühle zuzuführen.

Es wurde gefunden, dass eine Aufteilung des Mühlengesamtvolumens bzw. des Traggases derart, dass bis zu 70% der Volumenströmung als Heißgas im Mühlenunterteil und bis zu 30% als Kühlgas, insbesondere Frischluft, im Mühlenoberteil zugeführt werden, vorteilhaft für die Optimierung der Mahltrocknungseffizienz einer Zementklinker- und Schlackevermahlung sowie zugeführter Zuschlagstoffe ist. Dabei wird die Gesamtgasmenge der Vertikalmühle durch eine Beaufschlagung des Mühlenventilators und Messungen nach dem Filter geregelt.

Zweckmäßigerweise wird das Kühlgas im oberen Mühlenteil mit einer dem aufsteigenden Mahlgut-Gas-Gemisch entsprechenden Drallströmung in den Mahlraum eingeleitet. Bezogen auf die auf dem Mahlteller abrollenden Mahlwalzen und gegebenenfalls vorhandener Slavewalzen ist es zweckmäßig, die Zuführung des Kühlgases jeweils in einem Bereich zwischen den Mahlwalzen bzw. zwischen einer Mahlwalze und einer Slavewalze anzuordnen.

Es ist außerdem von Vorteil, dass die Eintrittstemperatur des Heißgases vor der Vertikalmühle gemessen und durch einen Heißgaserzeuger und/oder durch eine Gaszuführung aus benachbarten Prozessen, beispielsweise aus einem Klinkerkühler, und/oder durch Rückführung der Abgase nach dem Filter und Mühlenventilator geregelt werden kann.

Die erfindungsgemäße Vorrichtung zur Vermahlung von heißem und feuchtem Rohmaterial, insbesondere von Zementklinker, Schlacke und Zuschlagstoffen, sieht ein Mahlsystem mit einer Vertikalmühle, einem Sichter und einer Zuleitung für Heißgas sowie mit wenigstens einer Zuführeinrichtung für ein Kühlmedium zur Regulierung einer vorgegebenen Gas- und Produkttemperatur nach dem Sichter vor, wobei die Zuführeinrichtungen für ein Kühlgas, vorzugsweise für Frischluft aus der Umgebung, ausgelegt und oberhalb des Düsenrings im oberen Mühlenteil angeordnet sind.

Erfindungsgemäß ist eine Regelstrecke für die Zuführung des Kühlgases vorgesehen, in welcher die Gas- und Produkttemperatur nach dem Sichter eine Regelgröße ist.

Zweckmäßigerweise sind als Zuführeinrichtungen Drallkästen vorgesehen, welche zur Regelung der Kühlluftmengen in Abhängigkeit vom Temperatur-Sollwert nach dem Sichter verstellbare Drallklappen aufweisen.

Das Mahlsystem weist nach dem Sichter einen Filter, beispielsweise einen Schlauchfilter, und einen nachgeschalteten Mühlenventilator auf, welcher mit einer relativ hohen Saugleistung einen Unterdruck- bzw. Saugbetrieb in Mühle, Sichter und Filter gewährleistet und vorteilhaft eine Ansaugung von Umgebungsluft in das Mühlenoberteil ermöglicht. Gegebenenefalls kann auch ein Zusatzgebläse für die Kühlgaszuführung vorgesehen sein.

In Kombination mit dieser Regelstrecke kann eine zweite Regelstrecke vorteilhaft angeordnet sein, welche die Heißgasmenge und -temperatur in der Vertikalmühle regelt. Regelgrößen können die maximale Feuchte einer Rohmaterialkomponente sowie die Heißgastemperatur in der Zuleitung zur Vertikalmühle sein.

Zweckmäßigerweise sind die Drallklappen der Drallkästen für eine tangentiale Zuführung des Kühlgases eingerichtet, um zu gewährleisten, dass das Kühlgas nahezu die gleiche Strömungsrichtung wie die aufsteigende Mahlgut-Gas-Mischung aufweist.

Die Erfindung wird nachstehend anhand einer Zeichnung weiter erläutert. In dieser zeigen in einer stark schematisierten Darstellung:
- Fig. 1: ein Anlagenschema zu einer erfindungsgemäßen Vorrichtung;
- Fig. 2: eine Draufsicht auf den Mahlteller einer erfindungsgemäßen Vertikalmühle und
- Fig. 3: eine Draufsicht auf den Mahlteller einer erfindungsgemäßen 2+2-Walzen-Mühle.

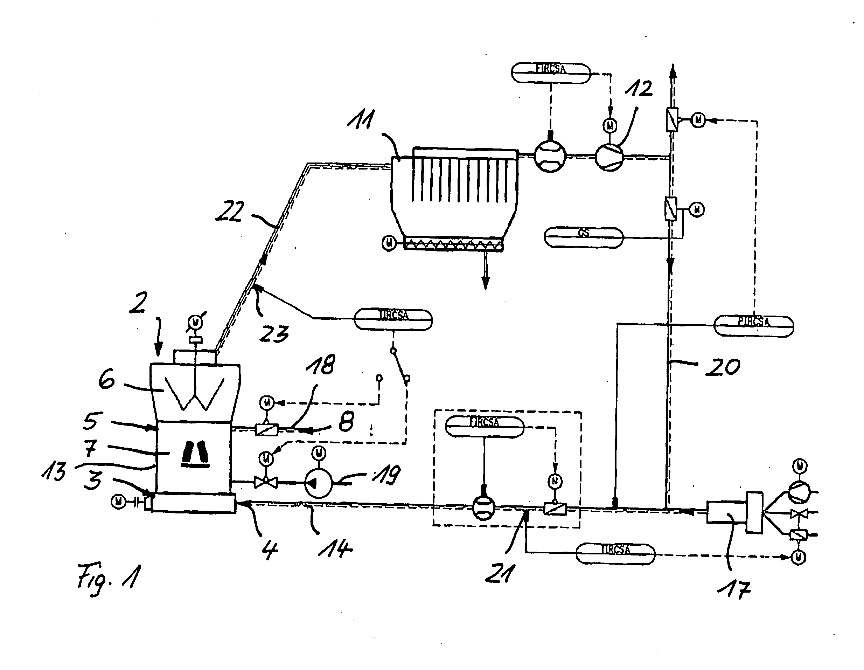

Fig. 1 zeigt ein Mahlsystem mit einer erfindungsgemäßen Vertikalmühle 2, welche hier eine Lufstrom-Wälzmühle des Loesche-Typs ist und einen integrierten Sichter 6 aufweist. In stark schematisierter Weise ist eine Zuführung von Heißgas 4 über eine Heißgaszuleitung 14 im unteren Mühlenteil 3 sowie eine Zuführung von Kühlgas 8 im oberen Mühlenteil 5 gezeigt. Es erfolgt eine getrennte Zuführung, insbesondere von maximal 70 % Heißgas 4 und maximal 30 % Kühlgas 8, in den Mahlraum 7, und Heißgas 4 und das Kühlgas 8 bilden das Traggas für den Mahl-Trocknungsprozeß.

Das Heißgas 4 wird in bekannter Weise über einen einen Mahlteller im unteren Mühlenteil 3 umgebenden Düsenring bzw. Schaufelkranz (nicht dargestellt) zugeführt und dient der Trocknung der über eine Aufgabeeinrichtung (nicht dargesellt) zugeführten Rohmaterialien, beispielsweise von Zementklinker, Schlacke und feuchten Zuschlagstoffen (nicht dargestellt) sowie anteilig der pneumatischen Förderung des Mahlgut-Gas-Gemisches in den Sichter 6.

Zur Regelung der Heißgaszuführung ist eine Temperaturmesseinrichtung 21 vor der Vertikalmühle 2 in der Heißgaszuleitung 14 angeordnet, und in Abhängigkeit von Menge, Feuchte und Temperatur der aufgegebenen Rohmaterialkomponenten sowie der vorgegebenen Gas- und Produkttemperatur nach dem Sichter 6 werden Temperatur und Volumen des Heißgases 4 geregelt.

Die Heißgasleitung 14 ist mit einer Rückführleitung 20 für das Abgas aus dem Filter 11, welches der Vertikalmühle 2 mit Sichter 6 nachgeschaltet ist, verbunden, so dass ein Teil des Abgases dem Heißgas 4 aus einem Heißgaserzeuger 17 zugemischt werden kann.

Das der Vertikalmühle 2 aufgegebene Heißgas 4 bildet zusammen mit dem im oberen Mühlenteil 5 zugeführten Kühlgas 8, welches insbesondere Frischluft bzw. Umgebungsluft ist, das Traggas, mit welchem das Mahlgut in der aufsteigenden Mahlgut-Gas-Mischung zum Sichter 6 und über eine Verbindungsleitung 22 zum Filter 11 gefördert wird.

Ein dem Filter 11 nachgeschalteter Mühlenventilator 12 weist die notwendige Saugleistung auf und sorgt für einen Unterdruck in Vertikalmühle 2, Sichter 6 und Filter 11, so dass in vorteilhafter Weise die für eine vorgegebene Gas- und Produkttemperatur nach dem Sichter 6 erforderliche Kühlluft 8 angesaugt werden kann. Die Kühlluft 8 gelangt über Zuführeinrichtungen 18, welche im oder am Mühlengehäuse 13 des oberen Mühlenteils 5 angeordnet sind, in den Mahlraum 7.

Zur Regelung der Kühlgas-bzw. Frischluftzuführung ist eine Regelstrecke mit einer Temperaturmesseinrichtung 23 nach dem Sichter 6 in der Verbindungsleitung 23 angeordnet.

Um auch bei besonders hohen Eintrittstemperaturen des Rohmaterials, beispielsweise des Zementklinkers, die gewünschte Gas- und Produkttemperatur nach dem Sichter 6 zu gewährleisten, ist eine Kühlwasserzuführung 19 in den Mahlraum 7 vorgesehen. Die regelbare Wassereinspritzung ist jedoch stark reduziert und wird im Wesentlichen durch die Frischluftzuführung im oberen Mühlenteil 5 ersetzt.

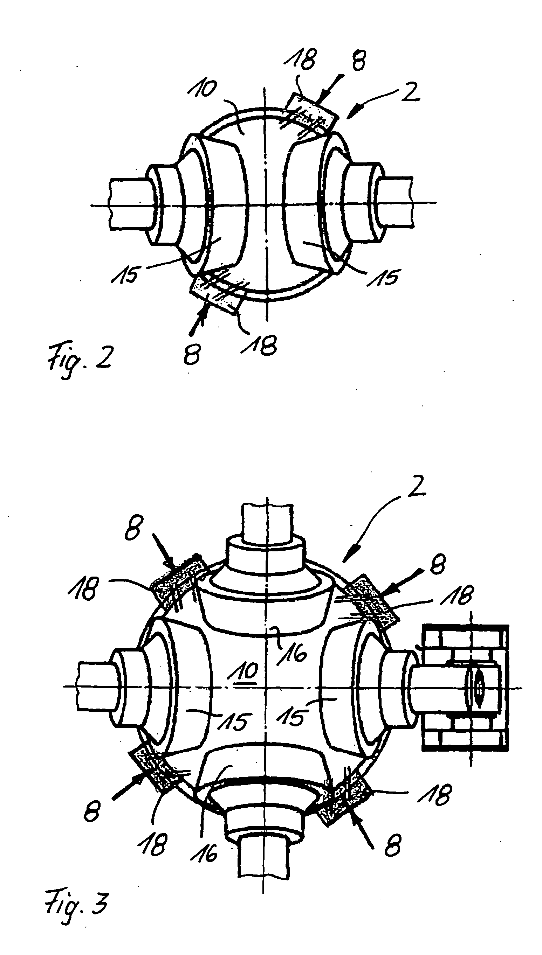

Fig. 2 zeigt stark schematisiert die Anordnung von Zuführeinrichtungen 18 für das Kühlgas 8 im oberen Mühlenteil.

Die Zuführeinrichtungen 18 sind hier Drallkästen, deren Drallklappen für eine geregelte tangentiale Zuführung bzw. Drallströmung entsprechend der aufsteigenden Mahlgut-GasStrömung im Mahlraum 7 (Fig. 1) angestellt werden können. Auf einem Mahlteller 10 rollen zwei Mahlwalzen 15 ab, und im Bereich zwischen diesen Mahlwalzen 15 sind zwei Drallkästen 18 als Zuführeinrichtungen für Frischluft 8 im oder am Mühlengehäuse 13 (siehe Fig. 1) angeordnet.

Fig. 3 zeigt stark schematisiert einen Ausschnitt einer 2 + 2 Walzen-Mühle, bei welcher zwei Mahlwalzen 15 und zwei Slavewalzen 16 auf einem Mahlteller 10 abrollen. Zwischen jeder Slavewalze 16 und jeder Mahlwalze 15 sind im oberen Mühltenteil 5 Zuführeinrichtungen 18 für eine geregelte Zuführung des Kühlgases 8 entsprechend der Drallströmung der aufsteigenden Mahlgut-Gas-Mischung angeordnet.

## Patentansprüche

1. Verfahren zur Vermahlung von heißem und feuchtem Rohmaterial, insbesondere von Zementklinker, Schlacke und Zuschlagstoffen,
bei welchem die Rohmaterialkomponenten einer Vertikalmühle (2) aufgegeben, vermahlen und mit Hilfe von Heißgas (4), welches im unteren Mühlenteil (3) über einen Düsenring zugeführt wird, zeitgleich getrocknet werden und
bei welchem mit Hilfe eines Kühlmediums eine vorgebbare Gas- und Produkttemperatur nach einem Sichter (6) eingehalten wird,
**dadurch gekennzeichnet,**
**dass** das Heißgas (4) mit einer Gaseintrittstemperatur zugeführt wird, welche von der Feuchte der Rohmaterialkomponente mit der höchsten Feuchte bestimmt wird, und
**dass** oberhalb des Düsenrings und getrennt vom Heißgas (4) ein Kühlgas (8) in die Vertikalmühle (2) eingeleitet und dem Mahlgut-Gas-Gemisch zugemischt wird.

2. Verfahren nach Anspruch 1,
**dadurch gekennzeichnet ,**
**dass**, bezogen auf die Traggasgesamtmenge in der Vertikalmühle (2) bis zu 30% Kühlgas (8) in einem oberen Mühlenteil (5) der Vertikalmühle (2) zugeführt werden.

3. Verfahren nach Anspruch 1 oder 2,
**dadurch gekennzeichnet,**
**dass** als Kühlgas (8) Frischluft zugeführt wird.

4. Verfahren nach einem der vorhergehenden Ansprüche,
**dadurch gekennzeichnet ,**
**dass** zumindest partiell als Kühlgas (8) gekühlte Luft zugeführt wird.

5. Verfahren nach einem der vorhergehenden Ansprüche,
**dadurch gekennzeichnet,**
**dass** als Gas- und Produkttemperatur nach dem Sichter (6) 95°C vorgegeben und durch eine geregelte Zuführung des Kühlgases (8) eingehalten werden.

6. Verfahren nach einem der vorhergehenden Ansprüche,
**dadurch gekennzeichnet,**
**dass** Vertikalmühle (2), Sichter (6) und ein Filter (11) mit Unterdruck beaufschlagt werden und Umgebungsluft als Kühlgas (8) angesaugt wird.

7. Verfahren nach Anspruch 6,
**dadurch gekennzeichnet,**
**dass** der Unterdruck durch einen Mühlenventilator (12) mit einer erforderlichen Volumenströmung erzeugt wird, welcher dem Filter (11) nachgeschaltet ist.

8. Verfahren nach einem der vorhergehenden Ansprüche,
**dadurch gekennzeichnet,**
**dass** das Heißgas (4) mit einer Eintrittstemperatur 180°C, beispielsweise um 230°C, der Vertikalmühle (2) zugeführt wird.

9. Verfahren nach einem der vorhergehenden Ansprüche,
**dadurch gekennzeichnet,**
**dass** die Heißgaseintrittstemperatur in die Vertikalmühle (2) in Abhängigkeit von Menge und Feuchte der Gesamt- oder Einzelkomponenten des Rohmaterials geregelt wird.

10. Verfahren nach einem der vorhergehenden Ansprüche, **dadurch gekennzeichnet,**
**dass** bis zu 70% der Volumenströmung in der Vertikalmühle (2) als Heißgas (4) zugeführt werden.

11. Verfahren nach einem der vorhergehenden Ansprüche,
**dadurch gekennzeichnet,**
**dass** die Gesamtmenge der Vertikalmühle (2) durch Messung nach dem Filter (11) und eine Beaufschlagung des Mühlenventilators (12) geregelt wird.

12. Verfahren nach einem der vorhergehenden Ansprüche,
**dadurch gekennzeichnet,**
**dass** das Kühlgas (8) mit einer dem aufsteigenden Mahlgut-Gas-Gemisch entsprechenden Drallströmung in den Mahlraum (7) eingeleitet wird.

13. Verfahren nach einem der vorhergehenden Ansprüche,
**dadurch gekennzeichnet,**
**dass** das Kühlgas (8) über Zuführeinrichtungen (18) im Mühlengehäuse (13), welche im Bereich des oberen Mühlenteils (5) und zwischen Mahlwalzen (15) bzw. zwischen Mahlwalzen (15) und Slavewalzen (16) angeordnet sind, in den Mahlraum (7) eingeleitet wird.

14. Verfahren nach einem der vorhergehenden Ansprüche,
**dadurch gekennzeichnet,**
**dass** die Heißgaseintrittstemperatur vor der Vertikalmühle (2) gemessen und durch einen Heißgaserzeuger (17) und/oder durch eine Gaszuführung aus benachbarten Prozessen und/oder Rückführung des Gases nach dem Mühlenventilator (12) geregelt wird.

15. Vorrichtung zur Vermahlung von heißem und feuchtem Rohmaterial, insbesondere von Zementklinker, Schlacke und Zuschlagstoffen,
mit einer Vertikalmühle (2), einem Sichter (6) und einer Zuleitung (14) für Heißgas (4), welches über einen Düsenring im unteren Mühlenteil (3) in den Mahlraum (7) gelangt, und
mit wenigstens einer Zuführeinrichtung (18) für ein Kühlmedium, mit welchem eine vorgebbare Gas- und Produkttemperatur nach dem Sichter (6) regulierbar ist,
insbesondere zur Durchführung des Verfahrens nach einem der Ansprüche 1 bis 14,
**dadurch gekennzeichnet,**
**dass** die Zuführeinrichtungen (18) für ein Kühlgas (8) als Kühlmedium ausgelegt und oberhalb des Düsenrings im oberen Mühlenteil (5) angeordnet sind und
**dass** eine Regelstrecke für die Zuführung von Frischluft (8) als Kühlgas vorgesehen ist und die Gas- und
Produkttemperatur nach dem Sichter (6) eine Regelgröße ist.

16. Vorrichtung nach Anspruch 15,
**dadurch gekennzeichnet,**
**dass** die Zuführeinrichtungen (18) für das Kühlgas (8) zwischen Mahlwalzen (15) oder zwischen Mahlwalzen (15) und Slavewalzen (16) angeordnet sind.

17. Vorrichtung nach Anspruch 15 oder 16,
**dadurch gekennzeichnet ,**
**dass** als Zuführeinrichtungen (18) Drallkästen angeordnet sind, welche zur geregelten Zuführung des Kühlgases (8) verstellbare Drallklappen aufweisen.

18. Vorrichtung nach einem der Ansprüche 15 bis 17,
**dadurch gekennzeichnet ,**
**dass** ein Zusatzgebläse für die Zuführung der Frischluft (8) angeordnet ist.

19. Vorrichtung nach einem der Ansprüche 15 bis 18,
**dadurch gekennzeichnet ,**
**dass** oberhalb des Mahltellers Zuführeinrichtungen (19) für Kühlwasser angeordnet sind.

20. Vorrichtung nach einem der Ansprüche 15 bis 19,
**dadurch gekennzeichnet ,**
**dass** eine Regelstrecke für die Eintrittstemperatur des Heißgases (4) in die Vertikalmühle (2) vorgesehen ist und die höchste Feuchte einer Rohmaterialkomponente eine Regelgröße ist.

21. Vorrichtung nach einem der Ansprüche 15 bis 20,
**dadurch gekennzeichnet ,**
**dass** eine Temperaturmesseinrichtung (21) für das Heißgas (4) in der Zuleitung (14) vor der Vertikalmühle (2) angeordnet ist und zur Temperaturregelung mit einem Heißgaserzeuger (17) verbunden ist.

22. Vorrichtung nach einem der Ansprüche 15 bis 21,
**dadurch gekennzeichnet ,**
**dass** die Zuleitung (14) für das Heißgas (4) mit einer Rückführleitung (20) für das Heißgas aus dem Mahl-Trocknungsprozess und nach dem Mühlenventilator (12) und/oder mit einer Heißgaszuführung aus benachbarten Prozessen, z.B. von einem Klinkerkühler, verbunden ist.

23. Vorrichtung nach einem der Ansprüche 17 bis 22,
**dadurch gekennzeichnet ,**
**dass** die Drallklappen der Drallkästen für eine tangentiale Zuführung des Kühlgases (8) verstellbar sind.

## Claims

1. Method for grinding hot and wet raw material, particularly cement clinker, slag and aggregates,
in which the raw material components are fed to a vertical mill (2), ground and simultaneously dried with the aid of hot gas (4) supplied via a nozzle ring to a lower mill part (3) and
in which with the aid of a cooling medium a predeterminable gas and product temperature downstream of a classifier (6) is maintained,
**characterized in that**
the hot gas (4) is supplied with a gas inlet temperature which is determined by the moisture content of the raw material component with the highest moisture level and
above the nozzle ring and separately from the hot gas (4) a cooling gas (8) is introduced into the vertical mill (2) and admixed to the grinding material-gas mixture.

2. Method according to claim 1,
**characterized in that**,
relative to the total carrying gas quantity in the vertical mill (2), up to 30% cooling gas (8) is supplied in an upper mill part (5) of vertical mill (2).

3. Method according to claim 1 or 2,
**characterized in that**
fresh air is supplied as cooling gas (8).

4. Method according to one of the preceding claims,
**characterized in that**
at least partially cooled air is supplied as cooling gas (8).

5. Method according to one of the preceding claims,
**characterized in that**
95° C is preset as gas and product temperature downstream of classifier (6) and is maintained by a controlled supply of cooling gas (8).

6. Method according to one of the preceding claims,
**characterized in that**
vacuum is supplied to vertical mill (2), classifier (6) and a filter (11) and ambient air is sucked in as cooling gas (8).

7. Method according to claim 6,
**characterized in that**
the vacuum is produced by a mill fan (12) with a necessary volume flow and which is connected downstream of filter (11).

8. Method according to one of the preceding claims,
**characterized in that**
the hot gas (4) is supplied with an inlet temperature of 180° C, e.g. around 230° C, to the vertical mill (2).

9. Method according to one of the preceding claims,
**characterized in that**
the hot gas inlet temperature in vertical mill (2) is controlled as a function of the quantity and moisture content of the overall or individual components of the raw material.

10. Method according to one of the preceding claims,
**characterized in that**
up to 70% of the volume flow in vertical mill (2) is supplied as hot gas (4).

11. Method according to one of the preceding claims,
**characterized in that**
the total gas quantity of vertical mill (2) is controlled by measurement downstream of filter (11) and action on the mill fan (12).

12. Method according to one of the preceding claims,
**characterized in that**
the cooling gas (8) is introduced into the grinding area (7) with a swirling flow corresponding to the rising grinding material-gas mixture.

13. Method according to one of the preceding claims,
**characterized in that**
the cooling gas (8) is introduced into grinding area (7) via supply devices (18) in mill housing (13) and which are located in the vicinity of the upper mill part (5) and between grinding rollers (15) or between grinding rollers (15) and slave rollers (16).

14. Method according to one of the preceding claims,
**characterized in that**
the hot gas inlet temperature is measured upstream of vertical mill (2) and is controlled by a hot gas generator (17) and/or by a gas supply from neighbouring processes and/or a return of the gas downstream of mill fan (12).

15. Device for grinding hot, wet raw material, particularly cement clinker, slag and aggregates,
having a vertical mill (2), a classifier (6) and a feed line (14) for hot gas (4), which passes via a nozzle ring in the lower mill part (3) into grinding area (7) and
having at least one supply device (18) for a cooling medium with which it is possible to regulate a predeterminable gas and product temperature downstream of the classifier (6),
particularly for performing the method according to one of the claims 1 to 14, **characterized in that**
the supply devices (18) are designed for a cooling gas (8) as cooling medium and are positioned upstream of the nozzle ring in the upper mill part (5) and that there is a controlled system for the supply of fresh air (8) as cooling gas and the gas and product temperature downstream of classifier (6) is a controlled variable.

16. Device according to claim 15,
**characterized in that**
the supply devices (18) for the colling gas (8) are positioned between grinding rollers (15) or between grinding rollers (15) and slave rollers (16).

17. Device according to claim 15 to 16,
**characterized in that**
as supply devices (18) swirl boxes are arranged which have adjustable swirl flaps for the controlled supply of cooling gas (8).

18. Device according to one of the claims 15 to 17,
**characterized in that**
there is an additional blower for the supply of fresh air (8).

19. Device according to one of the claims 15 to 18,
**characterized in that**
supply devices (19) for cooling water are located above the grinding pan.

20. Device according to one of the claims 15 to 19,
**characterized in that**
a controlled system for the inlet temperature of hot gas (4) in vertical mill (2) is provided and the highest moisture content of a raw material component is a controlled variable.

21. Device according to one of the claims 15 to 20,
**characterized in that**
a temperature measuring device (21) for the hot gas (4) is arranged in feed line (14) upstream of vertical mill (2) and is connected to a hot gas generator (17) for temperature control purposes.

22. Device according to one of the claims 15 to 21,
**characterized in that**
the feed line (14) for hot gas (4) is connected to a return line (20) for the hot gas from the mill drying process and downstream of the mill fan (12) and/or with a hot gas supply from neighbouring processes, e.g. from a clinker cooler.

23. Device according to one of the claims 17 to 22,
**characterized in that**
the swirl flaps of the swirl boxes are adjustable for a tangential supply of cooling gas (8).

## Revendications

1. Procédé pour broyer une matière première chaude et humide, en particulier du clinker de ciment, des scories et des additifs,
dans lequel les composants de la matière première sont introduits dans un broyeur vertical (2), broyés et séchés simultanément à l'aide d'un gaz chaud (4) qui est introduit dans la partie inférieure (3) du broyeur par l'intermédiaire d'un anneau de buses, et
dans lequel, à l'aide d'un milieu de refroidissement, une température prédéterminée des gaz et du produit est maintenue après un tamis (6),
***caractérisé***
***en* ce *que*** le gaz chaud (4) est introduit avec une température d'entrée de gaz qui est déterminée par l'humidité de la composante de matière première présentant la plus forte humidité, et
*en ce qu*'au-dessus de l'anneau de buses et séparément du gaz chaud (4), un gaz de refroidissement (8) est introduit dans le broyeur vertical (2) et mélangé au mélange produit à broyer-gaz.

2. Procédé selon la revendication 1, ***caractérisé en* ce que**, rapporté à la quantité totale de gaz porteur dans le broyeur vertical (2), jusqu'à 30 % de gaz de refroidissement (8) sont introduits dans une partie supérieure (5) du broyeur vertical (2).

3. Procédé selon la revendication 1 ou 2, caract*érisé en ce que* de l'air frais est introduit en tant que gaz de refroidissement (8).

4. Procédé selon l'une quelconque des revendications précédentes, *caractérisé en ce qu*'au moins en partie, de l'air refroidi est introduit comme gaz de refroidissement (8).

5. Procédé selon l'une quelconque des revendications précédentes, ***caractérisé en ce que**,* comme température du gaz et du produit après le tamis (6), 95°C sont imposés et maintenus par une introduction régulée du gaz de refroidissement (8).

6. Procédé selon l'une quelconque des revendications précédentes, ***caractérisé en ce que*** le broyeur vertical (2), le tamis (6) et un filtre (11) sont exposés à une dépression et de l'air ambiant est aspiré comme air de refroidissement (8).

7. Procédé selon la revendication 6, ***caractérisé en ce que*** la dépression est produite par un ventilateur (12) du broyeur avec un débit volumique nécessaire, ventilateur qui est placé après le filtre (11).

8. Procédé selon l'une quelconque des revendications précédentes, ***caractérisé en* ce *que*** le gaz chaud (4) est introduit dans le broyeur vertical (2) avec une température d'entrée de 180°C, par exemple de 230°C.

9. Procédé selon l'une quelconque des revendications précédentes, ***caractérisé en ce que*** la température d'entrée du gaz chaud dans le broyeur vertical (2) est régulée en fonction de la quantité et de l'humidité des composants globaux ou individuels de la matière première.

10. Procédé selon l'une quelconque des revendications précédentes, ***caractérisé en ce que*** jusqu'à 70 % du débit volumique dans le broyeur vertical (2) sont introduits en tant que gaz chaud (4).

11. Procédé selon l'une quelconque des revendications précédentes, ***caractérisé en ce que*** la quantité totale du broyeur vertical (2) est régulée par mesure après le filtre (11) et par un chargement du ventilateur (12) du broyeur.

12. Procédé selon l'une quelconque des revendications précédentes, ***caractérisé en ce que*** le gaz de refroidissement (8) est introduit dans la chambre de broyage (7) avec un écoulement tourbillonant correspondant au mélange ascendant produit à broyer-gaz.

13. Procédé selon l'une quelconque des revendications précédentes, ***caractérisé en ce que*** le gaz de refroidissement (8) est introduit dans la chambre de broyage (7) par des dispositifs d'alimentation (18) dans le boîtier (13) du broyeur, qui sont placés au niveau de la partie supérieure (5) du broyeur et entre des rouleaux de broyage (15), ou bien entre des rouleaux de broyage (15) et des rouleaux esclaves (16).

14. Procédé selon l'une quelconque des revendications précédentes, ***caractérisé en ce que*** la température d'entrée du gaz chaud est mesurée avant le broyeur vertical (2) et régulée par un générateur (17) de gaz chaud et/ou par une introduction de gaz depuis des processus voisins et/ou réintroduction du gaz après le ventilateur (12) du broyeur.

15. Dispositif pour broyer une matière première chaude et humide, en particulier du clinker de ciment, des scories et des additifs,
avec un broyeur vertical (2), un tamis (6) et une conduite d'alimentation (14) de gaz chaud (4) qui arrive dans la chambre de broyage (7) dans la partie inférieure (3) du broyeur par l'intermédiaire d'un anneau de buses, et
avec au moins un dispositif d'alimentation (18) pour un milieu de refroidissement, avec lequel une température prédéterminée du gaz et du produit peut être régulée après le tamis (6), en particulier pour appliquer le procédé selon l'une quelconque des revendications 1 à 14,
***caractérisé***
***en ce que*** les dispositifs d'alimentation (18) sont conçus pour un gaz de refroidissement (8) comme milieu de refroidissement et sont placés au-dessus de l'anneau de buses dans la partie supérieure (5) du broyeur, et
*en ce qu*'une ligne de régulation est prévue pour introduire de l'air frais (8) comme gaz de refroidissement et la température du gaz et du produit après le tamis (6) est une grandeur de régulation.

16. Dispositif selon la revendication 15, ***caractérisé en ce que*** les dispositifs d'alimentation (18) pour le gaz de refroidissement (8) sont placés entre des rouleaux de broyage (15) ou entre des rouleaux de broyage (15) et des rouleaux esclaves (16).

17. Dispositif selon la revendication 15 ou 16, ***caractérisé en ce que**,* comme dispositifs d'alimentation (18) sont placés des caissons de turbulence qui comprennent des clapets de turbulence réglables pour réguler l'alimentation en gaz de refroidissement (8).

18. Dispositif selon l'une quelconque des revendications 15 à 17, *caractérisé en ce qu*'une soufflerie additionnelle est placée pour l'alimentation en air frais (8).

19. Dispositif selon l'une quelconque des revendications 15 à 18, *caractérisé en ce qu*'au-dessus du plateau de broyage sont placés des dispositifs d'alimentation (19) pour de l'eau de refroidissement.

20. Dispositif selon l'une quelconque des revendications 15 à 19, *caractérisé en ce qu*'une ligne de régulation est prévue pour la température d'entrée du gaz chaud (4) dans le broyeur vertical (2), et la plus forte humidité d'un composant de la matière première est une grandeur de régulation.

21. Dispositif selon l'une quelconque des revendications 15 à 20, *caractérisé en ce qu*'un dispositif (21) de mesure de température est placé pour le gaz chaud (4) sur la conduite d'alimentation (14) avant le broyeur vertical (2) et est relié à un générateur (17) de gaz chaud pour la régulation en température.

22. Dispositif selon l'une quelconque des revendications 15 à 21, ***caractérisé en ce que*** la conduite d'alimentation (14) pour le gaz chaud (4) est reliée à une conduite de retour (20) pour le gaz chaud depuis le processus de broyage-séchage et après le ventilateur (12) du broyeur et/ou à une alimentation de gaz chaud depuis des processus voisins, par exemple un refroidisseur de clinker.

23. Dispositif selon l'une quelconque des revendications 17 à 22, ***caractérisé en ce que*** les clapets de turbulence des caissons de turbulence sont réglables pour une alimentation tangentielle du gaz de refroidissement (8).
